(19) Europäisches Patentamt
European Patent Office
Office européen des brevets

(11) **EP 3 789 928 A2**

(12) **EUROPEAN PATENT APPLICATION**

(43) Date of publication:
**10.03.2021 Bulletin 2021/10**

(51) Int Cl.:
***G06N 3/04*** *(2006.01)*

(21) Application number: **20187317.1**

(22) Date of filing: **23.07.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.08.2019 KR 20190098810**
**14.10.2019 KR 20190127258**

(71) Applicant: **Samsung Electronics Co., Ltd.**
**Gyeonggi-do 16677 (KR)**

(72) Inventors:
• **Son, Jinwoo**
**16678 Gyeonggi-do (KR)**

• **Son, Changyong**
**16678 Gyeonggi-do (KR)**
• **Yoo, Jaehyoung**
**16678 Gyeonggi-do (KR)**
• **Lee, Seohyung**
**16678 Gyeonggi-do (KR)**
• **Jung, Sangil**
**16678 Gyeonggi-do (KR)**
• **Choi, Changin**
**16678 Gyeonggi-do (KR)**
• **Han, Jaejoon**
**16678 Gyeonggi-do (KR)**

(74) Representative: **Arnold & Siedsma**
**Bezuidenhoutseweg 57**
**2594 AC The Hague (NL)**

(54) **NEURAL NETWORK METHOD AND APPARATUS**

(57)    A processor-implemented data processing method and apparatus for a neural network is provided. The data processing method includes generating cumulative data by accumulating results of multiplication operations between at least a portion of input elements in an input plane and at least a portion of weight elements in a weight plane, and generating an output plane corresponding to an output channel among output planes of an output feature map respectively corresponding to output channels based on the generated cumulative data.

**FIG. 14**

EP 3 789 928 A2

## Description

BACKGROUND

1. Field

The following description relates to a neural network method and apparatus.

2. Description of Related Art

The technological automation of processes such as recognition, for example voice recognition and speech recognition, has been implemented through processor implemented neural network models, as specialized computational architectures, which, after substantial training, may provide computationally intuitive mappings between input patterns and output patterns. The trained capability of generating such mappings may be referred to as a learning capability of the neural network. Further, because of the specialized training, such specially trained neural network may thereby have a generalization capability of generating a relatively accurate output with respect to an input pattern that the neural network may not have been trained for, for example.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In a general aspect, a processor implemented data processing method includes receiving a first input plane corresponding to a first input channel from among a plurality of input planes of an input feature map, receiving a first weight plane corresponding to the first input channel among a plurality weight planes of a weight kernel, generating first cumulative data by accumulating multiplication results from multiplication operations between at least a portion of first input elements in the first input plane, and at least a portion of first weight elements in the first weight plane; and generating a first output plane corresponding to a first output channel among a plurality of output planes of an output feature map based on the first cumulative data, wherein each of the plurality of input planes, and each of the plurality of weight planes respectively correspond to an input channel, and wherein each of the plurality of output planes corresponds to an output channel.

The generating of the first output plane may include generating the first output plane based on a sum of cumulative data for each input channel including the first cumulative data.

The method may include receiving a second input plane corresponding to a second input channel among the input planes, receiving a second weight plane corresponding to the second input channel among the plurality of weight planes; and generating second cumulative data by accumulating multiplication results from multiplications between at least a portion of second input elements in the second input plane, and at least a portion of second weight elements in the second weight plane.

The generating of the first output plane may include generating the first output plane based on a sum of the first cumulative data and the second cumulative data.

The generating of the first cumulative data may include extracting, from the first input plane, first input element vectors corresponding to the portion of the first weight elements, generating first weighted input element vectors corresponding to multiplication results from multiplication operations between the first input element vectors and the portion of the first weight elements; and generating the first cumulative data by accumulating the first weighted input element vectors.

The extracting of the first input element vectors may include determining offsets corresponding to the first input element vectors based on indices of the portion of the first weight elements; and extracting the first input element vectors from the first input plane based on the determined offsets.

A size of the first input element vectors and a size of the first weighted input element vectors may correspond to a single instruction multiple data (SIMD) operation unit.

When the first cumulative data is generated, an operation of multiplying zero weight elements corresponding to a value of zero among the portion of the first weight elements and the portion of the first input elements may be skipped.

The method may further include determining a number of non-zero weight elements not corresponding to zero among the first weight elements; and selecting an operation type corresponding to the determined number of non-zero weight elements from among a plurality of operation types to perform a preset type of operation.

The generating of the first cumulative data may include generating the first cumulative data by accumulating the multiplication results from the multiplication operations between the portion of the first input elements and the non-zero weight elements corresponding to the portion of the first weight elements based on the selected operation type.

The generating of the first cumulative data may include extracting, from the first input plane, first input element vectors corresponding to the non-zero weight elements based on indices of the non-zero weight elements, generating first weighted input element vectors corresponding to multiplication results from multiplication operations between the first input element vectors and the non-zero weight elements corresponding to the portion of the first weight elements; and generating the first cumulative data by accumulating the first weighted input element vectors.

The method may further include separately multiplying respective weight elements of each of the weight planes by plural elements of the first input plane.

In a general aspect, a data processing apparatus includes one or more processors configured to receive a first input plane corresponding to a first input channel from among a plurality of input planes of an input feature map, receive a first weight plane corresponding to the first input channel among a plurality of weight planes of a weight kernel, generate first cumulative data by accumulating multiplication results from multiplication operations between at least a portion of first input elements in the first input plane and at least a portion of first weight elements in the first weight plane; and generate a first output plane corresponding to a first output channel among a plurality of output planes of an output feature map respectively corresponding to output channels based on the first cumulative data, wherein each of the plurality of input planes, and each of the plurality of weight planes respectively correspond to an input channel, and wherein each of the plurality of output planes corresponds to an output channel.

The processor may further be configured to generate the first output plane based on a sum of cumulative data for each input channel including the first cumulative data.

The processor may be further configured to receive a second input plane corresponding to a second input channel among the input planes, receive a second weight plane corresponding to the second input channel among the plurality of weight planes; and generate second cumulative data by accumulating multiplication results from multiplications between at least a portion of second input elements in the second input plane and at least a portion of second weight elements in the second weight plane.

The processor may be further configured to generate the first output plane based on a sum of the first cumulative data and the second cumulative data.

The processor may be further configured extract, from the first input plane, first input element vectors corresponding to the portion of the first weight elements; generate first weighted input element vectors corresponding to multiplication results from multiplication operations between the first input element vectors and the portion of the first weight elements; and generate the first cumulative data by accumulating the first weighted input element vectors.

The processor may be further configured to determine offsets corresponding to the first input element vectors based on indices of the portion of the first weight elements; and extract the first input element vectors from the first input plane based on the determined offsets.

A size of the first input element vectors and a size of the first weighted input element vectors may correspond to a single instruction multiple data (SIMD) operation unit.

When the first cumulative data is generated, an operation of multiplying zero weight elements corresponding to a value of zero among the portion of the first weight elements and the portion of the first input elements may be skipped.

The processor may be further configured to determine a number of non-zero weight elements not corresponding to zero among the first weight elements; and select an operation type corresponding to the determined number of non-zero weight elements from among a plurality of operation types to perform a preset type of operation.

The processor may be further configured to generate the first cumulative data by accumulating the multiplication results from the multiplication operations between the portion of the first input elements and the non-zero weight elements corresponding to the portion of the first weight elements based on the selected operation type.

The processor may be further configured to extract, from the first input plane, first input element vectors corresponding to the non-zero weight elements based on indices of the non-zero weight elements, generate first weighted input element vectors corresponding to multiplication results from multiplication operations between the first input element vectors and the non-zero weight elements corresponding to the at least portion of the first weight elements; and generate the first cumulative data by accumulating the first weighted input element vectors.

The apparatus may include a memory storing instructions that, when executed by the one or more processors, configure the one or more processors to perform the receiving of the first input plane, the receiving of the first weight plane, the generating of the first cumulative data, and the generating of the first output plane.

In a general aspect, a processor-implemented method performed by a processor of an electronic apparatus includes receiving an input plane of a layer of a neural network including a plurality of input elements, receiving a weight plane corresponding to the input plane of the layer, the weight plane including a plurality of weight elements; and generating an output plane by accumulating multiplication results obtained by performing a multiplication operation between each of the weight elements in the weight plane and a corresponding input element of the input elements in the input plane.

When a zero weight element corresponding to a value of zero is present among the weight elements, a multiplication between the zero weight element and an input element corresponding to the zero weight element may be skipped.

A convolution operation associated with the layer of the neural network may be performed based on single instruction multiple data (SIMD).

The input plane and the weight plane may correspond to a single input channel, and the output plane corresponds to a single output channel.

The input plane may be one of a plurality of input planes corresponding to an input feature map of the layer, and the weight plane is one of a plurality of weight planes corresponding to a weight kernel of the layer, and wherein an output feature map of the layer is determined based on the output plane, and one or more output planes generated based on one or more other input planes excluding the input plane among the plurality of input planes, and one or more other weight planes excluding the weight plane among the plurality of weight planes.

In a general aspect, a processor-implemented method includes receiving an input feature map including a plurality of input planes, receiving a weight kernel including a plurality of weight planes, performing a cumulative convolution operation between the input feature map and the weight kernel, and generating an output plane based on the cumulative convolution operation.

The method may further include generating cumulative planes by performing multiply and accumulate (MAC) operations between the plurality of input planes and the plurality of weight planes.

The output plane may be generated by accumulating outputs of the cumulative planes.

Other features and aspects will be apparent from the following detailed description, the drawings, and the claims.

BRIEF DESCRIPTION OF DRAWINGS

FIG. 1 illustrates an example data processing apparatus with a neural network implementation, in accordance with one or more embodiments.
FIG. 2 illustrates an example convolution operation, in accordance with one or more embodiments.
FIG. 3 illustrates an example sliding window convolution operation.
FIGS. 4 and 5 respectively illustrate example generations of an output plane through cumulative convolution operations, in accordance with one or more embodiments.
FIGS. 6 and 7 respectively illustrate example multiply and accumulate (MAC) operations between an input plane and a weight plane for cumulative convolution operations, in accordance with one or more embodiments.
FIGS. 8 through 10 respectively illustrate example cumulative convolution operations using single instruction multiple data (SIMD) processing, in accordance with one or more embodiments.
FIG. 11 illustrates an example zero-skipping of a cumulative convolution operation, in accordance with one or more embodiments.
FIG. 12 illustrates an example of performing zero-skipping using a preset operation type, in accordance with one or more embodiments.
FIG. 13 is a flowchart illustrating an example cumulative convolution operation, in accordance with one or more embodiments.
FIG. 14 is a flowchart illustrating an example data processing method with a neural network implementation, in accordance with one or more embodiments.
FIG. 15 illustrates an example data processing apparatus with a neural network implementation, in accordance with one or more embodiments.
FIG. 16 illustrates an example electronic apparatus, in accordance with one or more embodiments.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

As used herein, the term "and/or" includes any one and any combination of any two or more of the associated listed items.

Throughout the specification, when an element, such as a layer, region, or substrate, is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween. As used herein, the term "and/or" includes any one and any combination of any two or more of the associated listed items.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

The terminology used herein is for describing various examples only and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein.

Also, in the description of example embodiments, detailed description of structures or functions that are thereby known after an understanding of the disclosure of the present application will be omitted when it is deemed that such description will cause ambiguous interpretation of the example embodiments.

Hereinafter, examples will be described in detail with reference to the accompanying drawings, and like reference numerals in the drawings refer to like elements throughout.

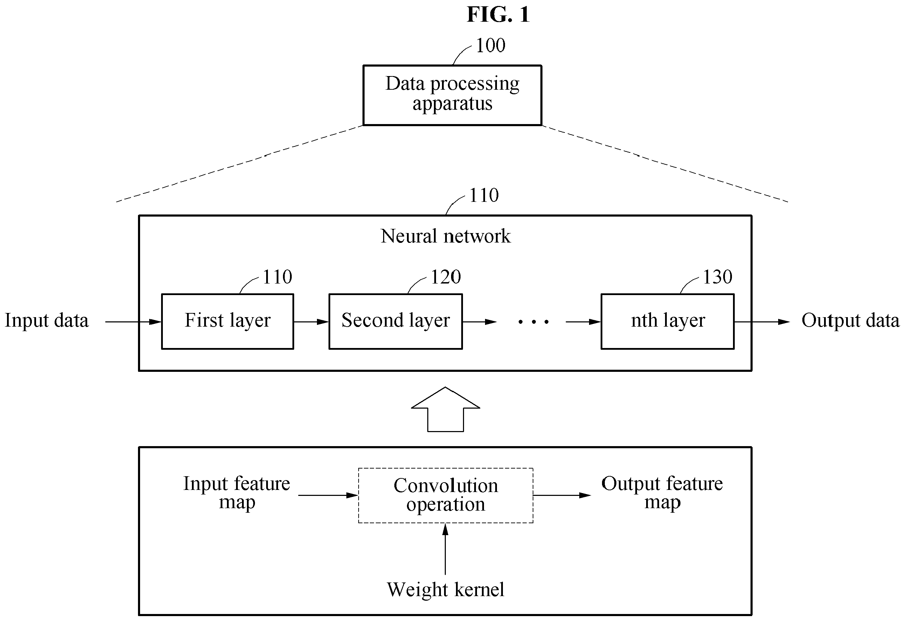

FIG. 1 illustrates an example data processing apparatus with a neural network implementation, in accordance with one or more embodiments. The data processing apparatus as described hereinafter may refer to an apparatus that processes data for a neural network, and will be hereinafter simply referred to as a data processing apparatus. Referring to FIG. 1, a data processing apparatus 100 may include a neural network 110. The data processing apparatus may process one or more operations associated with the neural network 110. As a non-limiting example, the one or more operations associated with the neural network 110 may include an object recognition operation, an image recognition operation, a speech recognition operation, a voice recognition operation, and a user verification operation, as only examples. Herein, it is noted that use of the term 'may' with respect to an example or embodiment, e.g., as to what an example or embodiment may include or implement, means that at least one example or embodiment exists where such a feature is included or implemented while all examples and embodiments are not limited thereto.

The one or more operations may be implemented through processor-implemented neural network models, as specialized computational architectures that, after substantial training, may provide computationally intuitive mappings between input data or patterns and output data or patterns or pattern recognitions of input patterns. The trained capability of generating such mappings or performing such pattern recognitions may be referred to as a learning capability of the neural network. Such trained capabilities may also enable the specialized computational architecture to classify such an input pattern, or portion of the input pattern, as a member that belongs to one or more predetermined groups. Further, because of the specialized training, such specially trained neural network may thereby have a generalization capability of generating a relatively accurate or reliable output with respect to an input pattern that the neural network may not have been trained for, for example.

In an example, the neural network 110 may be a deep neural network (DNN), as a non-limiting example. The DNN may include a plurality of layers. For example, the deep neural network may include an input layer to which input data is applied, an output layer for outputting a result derived through prediction based on training and the input data, and a plurality of hidden layers for performing a neural network operation between the input layer and the output layer.

In an example, the input layer may correspond to, or may be referred to as, the lowest layer of the neural network, and the output layer may correspond to, or may be referred to as, the highest layer of the neural network. A layer order may be assigned and named or referred to sequentially from the output layer, that is the highest layer, to the input layer that is the lowest layer. For example, a Hidden Layer 2 may correspond to a layer higher than a Hidden Layer 1 and the Input Layer, but lower than the Output Layer.

The DNN may include one or more convolutional layers, and may further include one or more of fully connected layers, a recurrent neural network, and the like, or may include different or overlapping neural network portions respectively with such full, convolutional, or recurrent connections, according to machine learning used to process information.

As noted, the neural network 110 may perform the one or more operations, for example, the object recognition operation or the user verification operation by mapping input data and output data that are in a nonlinear relationship based on deep learning approaches, such as in a convolution neural network or a recurrent neural network. The deep learning approach may refer to a machine learning method used to recognize, as non-limiting examples, an image or a voice (or speech) from a big dataset. The deep learning approach may be construed as a problem-solving process in optimization to locate a point at which energy or loss is minimized while training the neural network 110 using prepared training data. The deep learning approach may be classified into supervised or unsupervised learning, through which weights corresponding to an architecture or model of the neural network 110 may be obtained. Through such obtained weights or elements of kernel(s), the input data and the output data may be mapped according to a trained objective of the neural network 110.

The neural network 110 may be a deep neural network (DNN) including a plurality of layers which includes an input layer, at least one hidden layer, and an output layer. For example, as illustrated in FIG. 1, a first layer 110, one or more second layers 120, and an nth layer 130 may be at least a portion of the plurality of layers. The neural network 110 may include, as examples, at least one of a fully connected network, a convolutional neural network (CNN), or a recurrent neural network (RNN). For example, at least a portion of the plurality of layers in the neural network 110 may correspond to a CNN, and another portion of the plurality of layers in the neural network 110 may correspond to a fully connected network.

In the CNN or CNN portion, data input to each layer may be referred to as an input feature map or volume, and data output from each layer may be referred to as an output feature map or volume. The input feature map from a previous layer and the output feature map of a current layer may be referred to as activation data. In addition, an input feature map in an input layer may correspond to input data.

To process the operation associated with the neural network 110, the data processing apparatus 100 may perform a convolution operation between an input feature map and a weight kernel for each convolutional layer, and generate an output feature map based on a result of the convolution operation. The weight kernel may have multiple channels, corresponding to the number of channels of the input feature map, and there may further be multiple weight kernels resulting in the generation of an output feature map of multiple channels. The neural network 110 may have a capacity sufficient to implement a function, when a width and a depth of the neural network 110 are sufficiently large. The neural network 110 may achieve optimal performance when the neural network 110 learns or is trained with a sufficiently large amount of training data through a training process, as discussed above.

A weight kernel may be predetermined, e.g.,

the weight kernel includes trained weight elements, which indicates that it is determined before the neural network 110 is initiated (implemented). The initiation of the neural network 110 may indicate that the neural network 110 is ready for inference. In an example, the initiation of the neural network 110 may indicate that the neural network 110 is loaded in a memory, or that input data for the inference is input to the neural network 110 after the neural network 110 is loaded in the memory. Inference is the process of applying a trained neural network to an input to produce an output.

As is further described below, a convolution operation may be performed by accumulating, in an output feature map, intermediate results of the convolution operation, and may not require a buffering operation of converting a weight kernel or an input feature map to a form suitable for a convolution and storing it in a buffer. That is, the convolution operation may use data of the input feature map stored in a planar form. Thus, efficiency of the convolution operation may be improved greatly. Additionally, in the convolution operation, a unit operation may correspond to multiplying one weight element corresponding to a scalar and one input plane corresponding to a matrix. Thus, for weight elements having a value of zero, zero-skipping may be effectively processed through software.

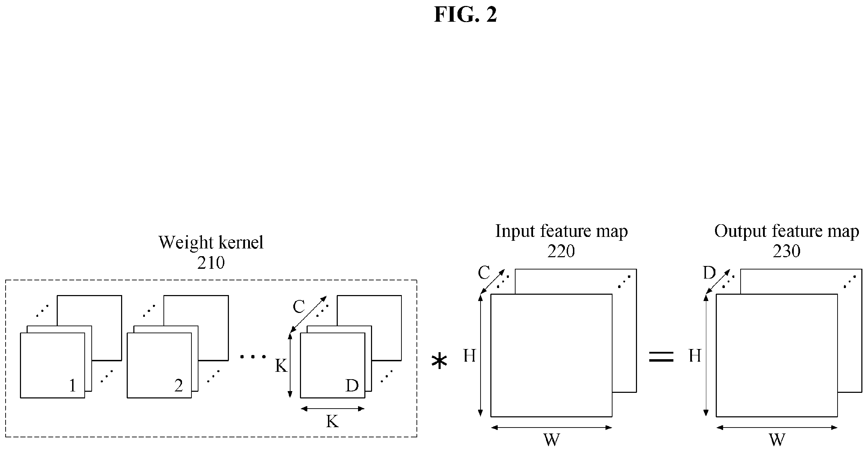

FIG. 2 is a diagram illustrating an example convolution operation. Referring to FIG. 2, an output feature map 230 may be generated through the performance of a convolution operation between a weight kernel 210 and an input feature map 220. In the example of FIG. 2, data of the weight kernel 210, the input feature map 220, and the output feature map 230 may be stored in a planar form in a memory. In an example, each of weight kernels 1 through D of the weight kernel 210 may include C weight planes, the input feature map 220 may include C input planes, and the output feature map 230 may include D output planes, wherein C and D are natural numbers. The C weight planes of the weight kernel 210 and the C input planes of the input feature map 220 may respectively correspond to input channels, and the D output planes may respectively correspond to output channels. In this example, C corresponds to the number of the input channels, and D corresponds to the number of the output channels.

Each weight plane and each output plane may include elements of a preset bit-width. For example, each weight plane may have a size of $K*K$, and each input plane and each output plane may have a size of $W*H$, in which W, K, and H indicate respective numbers of elements. An element of a weight plane may also be referred to as a weight element, and an element of an input plane and an element of an output plane may also be referred to as an input element and an output element, respectively. In an example, a convolution operation may be performed elementwise.

Hereinafter, it may be assumed for convenience of description that a width and a height of a weight plane are the same as K, and a size of an input plane and a size of an output plane are the same as W*H. However, a width and a height of a weight plane, and a size of an input plane and a size of an output plane may differ from each other according to an example.

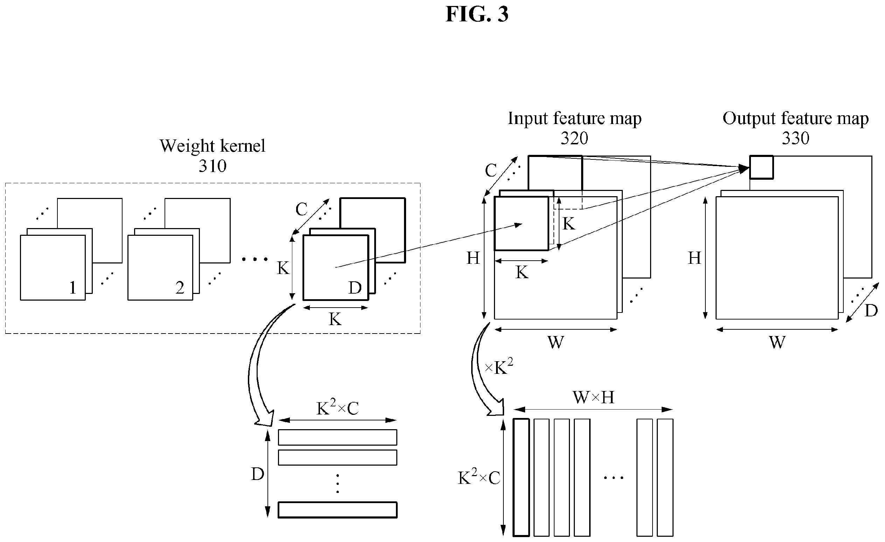

FIG. 3 illustrates an example of a sliding window convolution operation, in accordance with one or more embodiments.

Referring to FIG. 3, by implementing a sliding window-based convolution operation, a convolution operation is performed as a weight kernel 310 slides into an input feature map 320, and thus an output feature map 330 is generated.

Such sliding window convolution operation may be typically implemented to perform a convolution operation, and differs from a cumulative convolution operation described herein. For example, in the sliding window convolution operation, a buffering operation may be performed on the input feature map 320 to generate column vectors. However, in one or more examples, a cumulative convolution operation herein may accumulate, in the output feature map 330, intermediate results of a convolution operation, and thus there may not be a need to perform operations such as a buffering operation as in the sliding window convolution operation.

By the sliding window convolution operation, an operation between the weight kernel 310 and data stored in a noncontinuous address of the input feature map 320 may be performed while the weight kernel 310 is sliding across the input feature map 320, and thus the input feature map 320 may be converted to a suitable form of continuous data to increase a speed of processing the operation. In the example of FIG. 3, a sliding stride is 1, and zero-padding may be applied to each of horizontal and vertical directions of the input feature map 320 through two rows of zero element vectors. In this example, $K^2*C$ row vectors corresponding to the weight kernel 310 are defined, and the input feature map 320 is converted to $K^2*C$ column vectors.

A column vector may be buffered in a column buffer from the input feature map 320 in a planar structure or an interleaved structure. In an example of the planar structure, while the input feature map 320 is being buffered as a column vector, a noncontinuous maximum memory access may occur to an extent of a result from a multiplication of a height K of a kernel and the number C of input channels to determine one output element. In an example of the interleaved structure, while the input feature map 320 is being buffered as a column vector, the noncontinuous maximum memory access may occur to an extent of the height K of the kernel to determine one output element.

In contrast, in one or more examples, by a cumulative convolution operation discussed herein, the intermediate results of the convolution operation may be accumulated in the output feature map 330, and thus such additional buffering operation may not be needed to convert the input feature map 320 to such planar or interleaved structure. Thus, the cumulative convolution operation may minimize a memory access and maximize a speed of processing the convolution operation.

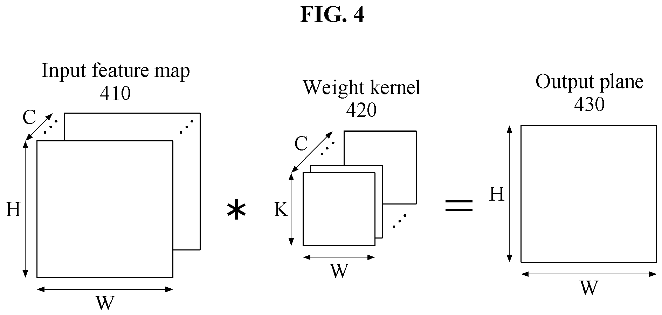

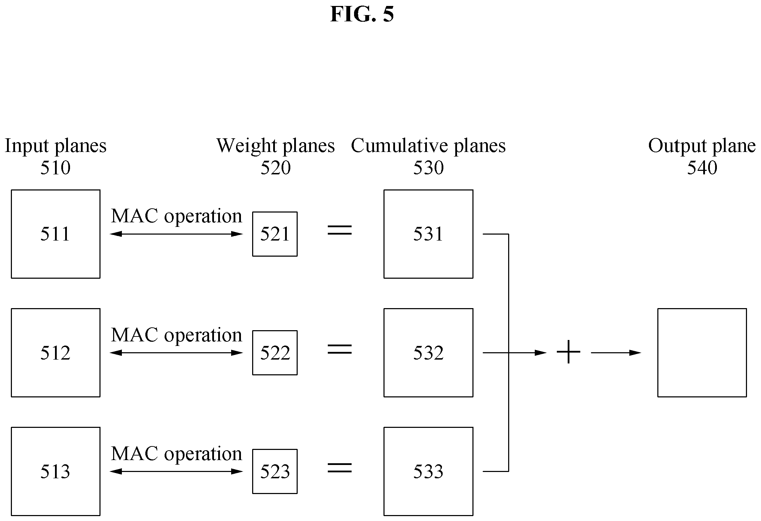

FIGS. 4 and 5 respectively illustrate examples of generating an output plane through a cumulative convolution operation, in accordance with one or more embodiments.

As previously discussed, in an example, an output feature map may include D output planes. FIGS. 4 and 5 respectively illustrate a process of generating one of the D output planes. The process illustrated in FIGS. 4 and 5 may be repeated for each of the D output planes, and the output feature map may be generated.

Referring to FIG. 4, an output plane 430 may be generated through the implementation of a convolution operation between an input feature map 410 and a weight kernel 420. In an example, the weight kernel 420 may be a dth weight kernel among D weight kernels, and the output plane 430 may be a dth output plane among the D output planes. For example, the input feature map 410 may include one or more input planes 510 as illustrated in FIG. 5, and the weight kernel 420 may include one or more weight planes 520 as illustrated in FIG. 5. Additionally, the output plane 430 may correspond to an output plane 540, as illustrated in FIG. 5.

Referring to FIG. 5, the input planes 510 may include, as non-limiting examples, input planes 511, 512, and 513. The number of the input planes 510 corresponds to the number C of input channels. In the example of FIG. 5, the number C of the input channels is three. However, the number three is provided as an example for convenience of description, and thus the number of input planes may be less than 3 or greater than 3 as corresponding to the number C of the input channels. The weight planes 520 may include, as non-limiting examples, weight planes 521, 522, and 523, and cumulative planes 530 may include, as non-limiting examples, cumulative planes 531, 532, and 533.

The cumulative plane 531 may be generated through a multiply and accumulate (MAC) operation between the input plane 511 and the weight plane 521. The cumulative plane 532 is generated through a MAC operation between the input plane 512 and the weight plane 522. The cumulative plane 533 may be generated through a MAC operation between the input plane 513 and the weight plane 523. The MAC operation will be described hereinafter in greater detail. When the cumulative planes 530 are generated, the output plane 540 is generated based on the cumulative planes 530. For example, the output plane 540 may be generated through a sum of the cumulative planes 530.

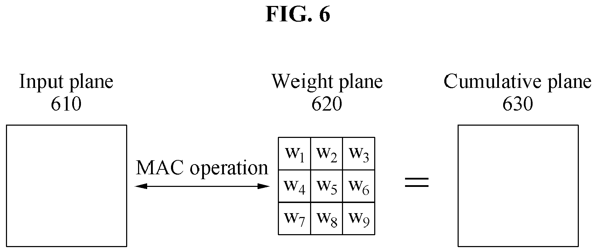

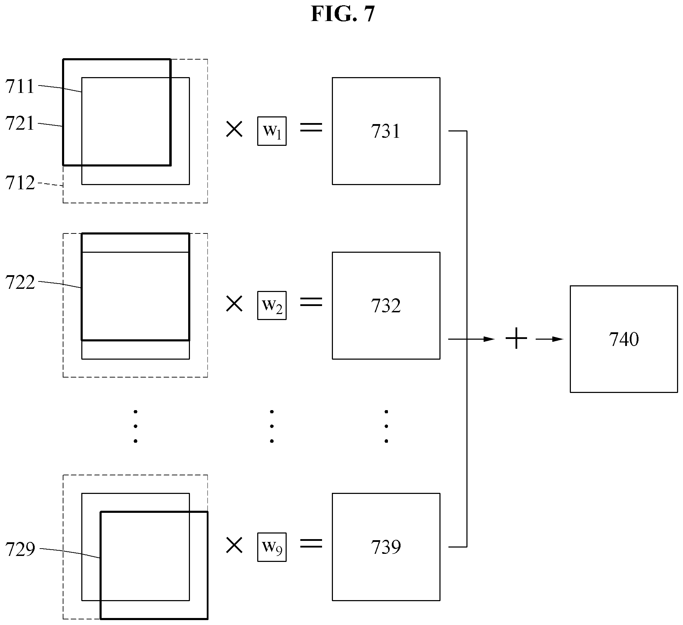

FIGS. 6 and 7 respectively illustrate an example MAC operation between an input plane and a weight plane for a cumulative convolution operation, in accordance with one or more embodiments.

Referring to FIG. 6, a cumulative plane 630 may be generated based on a MAC operation between each of input elements in an input plane 610 and each of weight elements in a weight plane 620. The weight plane 620 may include, as a non-limiting example, weight elements $w_1$ through $w_9$. Although the weight plane 620 is illustrated as having a size of 3*3 for convenience of description, the size of the weight plane 620 is not limited to the illustrated example and the weight plane 620 may have various other sizes. Although not illustrated in FIG. 6, each of the input plane 610 and the cumulative plane 630 may include a plurality of elements, and an elementwise convolution operation may be performed.

Referring to FIG. 7, an input plane 711 may correspond to the input plane 610 of FIG. 6, weight elements $w_1$ through $w_9$ of a weight plane of FIG. 7 may correspond to the weight elements $w_1$ through $w_9$ of the weight plane 620 of FIG. 6, and a cumulative plane 740 may correspond to the cumulative plane 630 of FIG. 6. An input plane 712 may be generated by performing zero-padding on the input plane 711 based on a sliding stride. For example, when a size of the input plane 711 is W*H and the sliding stride is 1, the input plane 712 may have a size of (W+2)*(H+2).

Considering a sliding window approach, between the weight plane including the weight elements $w_1$ through $w_9$ and the input plane 712, in one or more examples, response regions 721 through 729 in the input plane 712 that respectively respond to the weight elements $w_1$ through $w_9$ may be defined. For example, input elements in the response region 721 respond to the weight element $w_1$, input elements in the response region 722 respond to the weight element $w_2$, and input elements in the response region 729 respond to the weight element $w_9$.

A size of the response regions 721 through 729 is the same as a size of the input plane 711. In addition, respective offsets of the response regions 721 through 729 are determined based on respective indices of the weight elements $w_1$ through $w_9$. For example, when a width of the input plane 711 is W+2, the offsets of the response regions 721 through 729 are defined as (W+2)*a+b, in which "a" denotes a quotient obtained by dividing (i-1) by K, and "b" denotes a remainder obtained by dividing (i-1) by K, and i denotes an index of an weight element and K denotes a width of a weight kernel. In this example, an offset may be determined based on an input plane, for example, an original point of the input plane to which padding is applied. Thus, the offset of the response region 721 is 0, the offset of the response region 722 is 1, and the offset of the response region 729 is (W+2)*2+2.

Multiplication results 731 through 739 are generated from respective multiplications between input elements in the response regions 721 through 729 and the weight elements $w_1$ through $w_9$. The cumulative plane 740 is generated by accumulating each of the multiplication results 731 through 739. In an example, an output plane may be generated through a sum of C cumulative planes. In this example, the cumulative plane 740 of FIG. 7 corresponds to one of the C cumulative planes. The process described above with reference to FIG. 7 is repeated for each of the C cumulative planes, and the output plane is generated. Each of elements in the multiplication results 731 through 739 may also be referred to as a multiplication result element. Additionally, in an example of an output feature map including D output planes, the output feature map may be determined through the D output planes generated in such a cumulative manner.

As described above, an output feature map may be generated by accumulating multiplication results, for example, the multiplication results 731 through 739, that correspond to intermediate results of a convolution operation. Accordingly, an operation of converting an input feature map to continuous data, and storing the continuous data in a buffer, may not be needed. Thus, it is possible to reduce an amount of time used for such conversion and buffering, and accelerate an operational speed of the convolution operation and save memory space used to store the converted data.

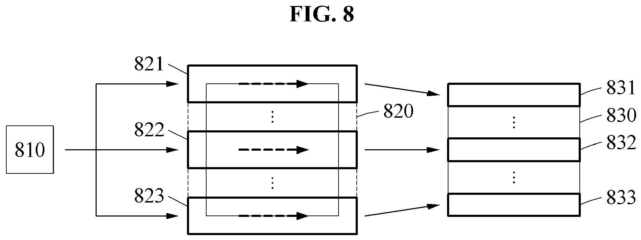

FIGS. 8 through 10 respectively illustrate an example of a cumulative convolution operation using single instruction multiple data (SIMD) processing, in accordance with one or more embodiments. SIMD may refer to an operation processing method of a processor that processes multiple data with a single instruction. As to be described hereinafter, a cumulative convolution operation according to one or more embodiments may be performed through SIMD.

Referring to FIG. 8, a weight plane 810 slides into a sliding region 821 of an input plane 820, and a MAC operation is performed therebetween, and a cumulative region 831 of a cumulative plane 830 is determined. Similarly, the weight plane 810 slides into a sliding region 822 of the input plane 820, and a MAC operation is performed therebetween, and a cumulative region 832 of the cumulative plane 830 is determined. Additionally, the weight plane 810 slides into a sliding region 823 of the input plane 820, and a MAC operation is performed therebetween, and a cumulative region 833 of the cumulative plane 830 is determined. A height of the sliding regions 821 through 823 may correspond to a height of the weight plane 810, and a height of the cumulative regions 831 through 833 may correspond to a single element. Through such process described above, a relationship between sliding regions and cumulative regions may be established.

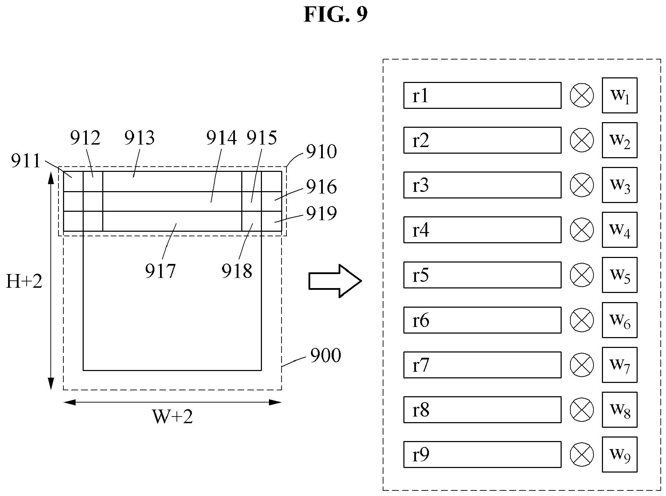

Referring to FIG. 9, a sliding region 910 in an input plane 900 may include response regions 911 through 919 of weight elements $w_1$ through $w_9$. Respective offsets of the response regions 911 through 919 are determined based on respective indices of the weight elements $w_1$ through $w_9$. For example, as illustrated in FIG. 9, the offsets of the response regions 911 through 919 are defined as (W+2)*a+b. In this example, the offsets of the response regions 911 through 919 are 0, 1, 2, (W+2), (W+2)+1, (W+2)+2, (W+2)*2, (W+2)*2+1, and (W+2)*2+2, respectively. An offset may be determined based on a sliding region, for example, an original point of each sliding region.

From the response regions 911 through 919, input element vectors are extracted and stored in registers r1 through r9. For example, a first input element vector of the response region 911 is stored in the register r1, and a second input element vector of the response region 912 is stored in the register r2. Similarly, the input element vectors are respectively stored in the registers r1 through r9 in sequential order.

Each of the input element vectors may be multiplied elementwise by a corresponding weight element among the weight elements $w_1$ through $w_9$, and thus weighted input element vectors are generated. In an example, the first input element vector of the response region 911 is stored in the register r1 and multiplied by the weight element $w_1$, and thus a first weighted input element vector is generated. Similarly, the second input element vector of the response region 912 is stored in the register r2 and multiplied by the weight element $w_2$, and thus a second weighted input element vector is generated. A size of the response regions 911 through 919, the input element vectors, and the weighted input element vectors may correspond to a SIMD operation unit.

The weighted input element vectors generated through such processes described above may be accumulated, and a cumulative vector corresponding to the sliding region 910 may be generated. The process may be repeated for each of sliding regions, and cumulative vectors respectively corresponding to the sliding regions may be generated. The generated cumulative vectors may form a cumulative plane. Here, a cumulative plane and a cumulative vector may refer to different forms of cumulative data, and may collectively be referred to as cumulative data.

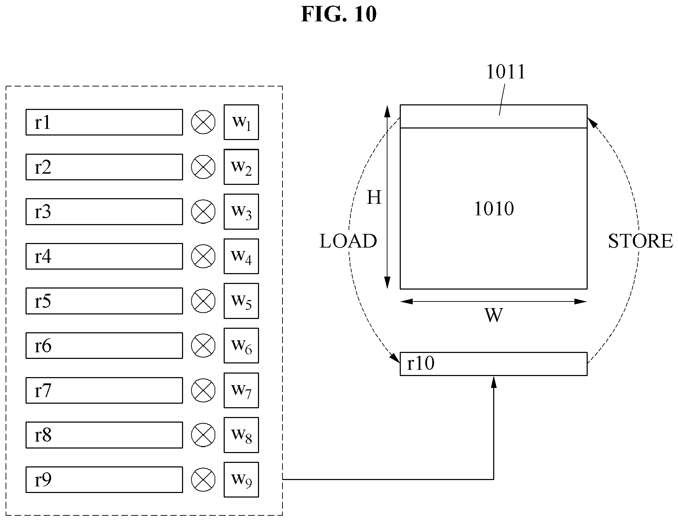

Referring to FIG. 10, a previously stored cumulative vector, hereinafter referred to as a first cumulative vector, is loaded from an output region 1011 in an output plane 1010 and then stored in a register r10. When a new cumulative vector, hereinafter referred to as a second cumulative vector, is generated through registers r1 through r9, the first cumulative vector and the second cumulative vector is accumulated in the register r10 and stored in the output region 1011.

In the example of FIG. 10, a process of storing a cumulative vector in the output region 1011 is performed at least one time. In an example, a first cumulative vector is generated through a MAC operation between a first input plane and a first weight plane that correspond to a first input channel, and stored in the output region 1011. Subsequently, a second cumulative vector may be generated through a MAC operation between a second input plane and a second weight plane that correspond to a second input channel. The generated first cumulative vector and second cumulative vector are accumulated and stored in the output region 1011. However, when an initial value is stored in the output region 1011, that is when a cumulative vector is initially generated, an operation of loading a cumulative vector from the output region 1011 may be omitted, and a newly generated cumulative vector may be stored in the output region 1011 without an accumulating operation.

When cumulative vectors are repeatedly stored in the output region 1011 based on the number of input channels (e.g., the number of accumulations is one less than the number of the input channels), an output element vector corresponding to the output region 1011 is determined. Additionally, such processes for the output region 1011 is performed on remaining output regions in the output plane 1010, the output plane 1010 may then be determined. Thus, a cumulative convolution operation may be implemented through SIMD.

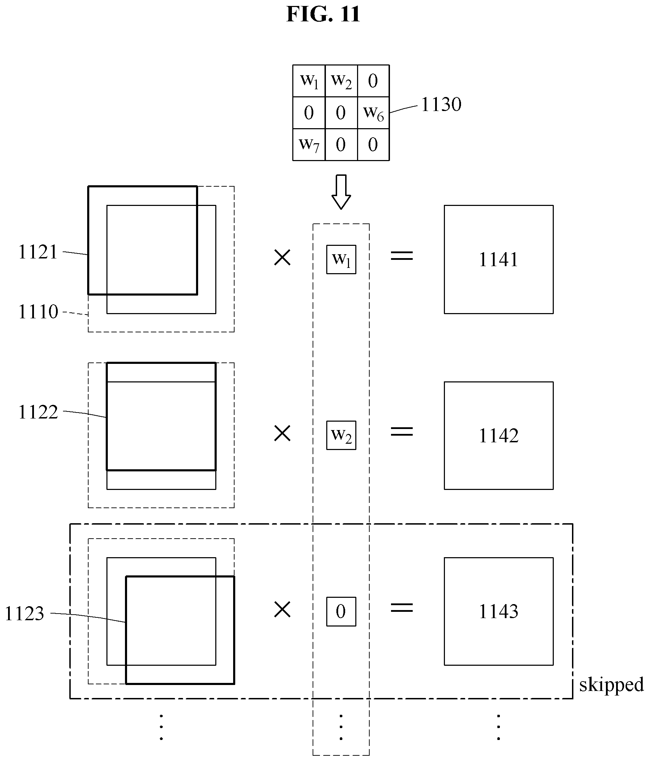

FIG. 11 illustrates an example of zero-skipping of a cumulative convolution operation, in accordance with one or more embodiments.

In an example, a convolution operation may be performed for each input plane as a unit, or for each response region in an input plane as a unit, and thus may effectively process zero-skipping through software, or a combination of software and hardware.

Referring to FIG. 11, multiplication results 1141 through 1143 are generated from respective multiplications between input elements in response regions 1121 through 1123 and weight elements $w_1$ through $w_9$.

Referring to the example illustrated in FIG. 11, weight elements $w_3$ through $w_5$, $w_8$, and $w_9$ are zero (0). A weight element corresponding to zero is referred to as a zero weight element, and a weight element not corresponding to zero is referred to as non-zero weight element. In this example, multiplication results, such as, for example, the multiplication result 1143, which is generated from a zero weight element, may not affect data of a cumulative plane or an output plane, and thus operations to obtain such multiplication results may be skipped.

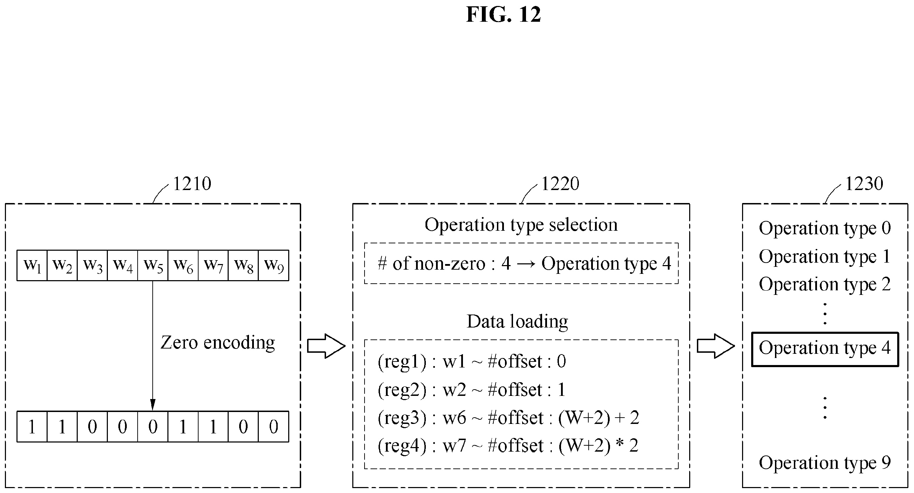

FIG. 12 illustrates an example of performing zero-skipping based on a preset operation type, in accordance with one or more embodiments.

Referring to FIG. 12, in operation 1210, zero encoding is performed. Through the zero encoding, the number of non-zero weight elements included among the weight elements is determined. In the example of FIG. 12, the number of non-zero weight elements may be determined to be four as a result of the zero encoding.

In operation 1220, an operation type corresponding to the determined number of non-zero weight elements may be selected from among operation types, and data corresponding to the non-zero weight elements is loaded into a register. In the example of FIG. 12, operation type 4 corresponding to the four non-zero weight elements may be selected. The operation types may be set to perform respective types of operation that are preset respectively based on the number of non-zero weight elements. For example, a corresponding operation type may be set for an example where non-zero weight elements are not present among the weight elements, and a corresponding operation type may be set for an example where all the weight elements are non-zero weight elements. When the number of the operation types is defined as N and the number of the weight elements is defined as K*K, N may be K*K+1 (N = K*K+1). In the example of FIG. 12, K = 3, and N = 10. The type of operation may refer to operations related to whether a MAC operation is performed with a zero weight element or a non-zero weight element. In an example, the type of operation is determined based on the number of zero weight elements or the number of non-zero weight elements.

Data to be loaded to a register may correspond to at least a portion of an input plane. For example, an input element vector corresponding to a non-zero weight element may be loaded to the register. An offset corresponding to the input element vector may be determined based on an index of the non-zero weight element, and the input element vector may be extracted from the input plane based on the determined offset and stored in the register. In the example of FIG. 12, offsets 0, 1, (W+2)+2, and (W+2)*2 are determined based on $w_1$, $w_2$, $w_6$, and $w_7$ corresponding to the non-zero weight elements, and input element vectors corresponding to the determined offsets are loaded to registers reg1, reg2, reg3, and reg4.

A preset type of operation may include a type of operation that performs a MAC operation between non-zero weight elements and data loaded to a register, and generates cumulative data. The data may be loaded to the register based on the number of the non-zero weight elements and an offset. For example, a MAC operation between a non-zero weight element and an input element vector stored in a register may be performed. In the example of FIG. 12, weighted input element vectors corresponding to multiplication results from multiplications between the non-zero weight elements $w_1$, $w_2$, $w_6$, and $w_7$ and the input element vectors stored in the registers reg1, reg2, reg3, and reg4 are generated, and the generated weighted input element vectors are accumulated to generate cumulative data.

In operation 1230, a source code corresponding to each operation type may be executed. In an example, a source code corresponding to each of operation types 0 through 9, as only examples, may be stored in a memory code area, and a source code corresponding to the selected operation type may be loaded from the memory code area and executed. In the example of FIG. 12, a source code corresponding to operation type 4 is executed. Such source code may occupy a memory space less, and thus the use of the source code may not degrade memory efficiency greatly.

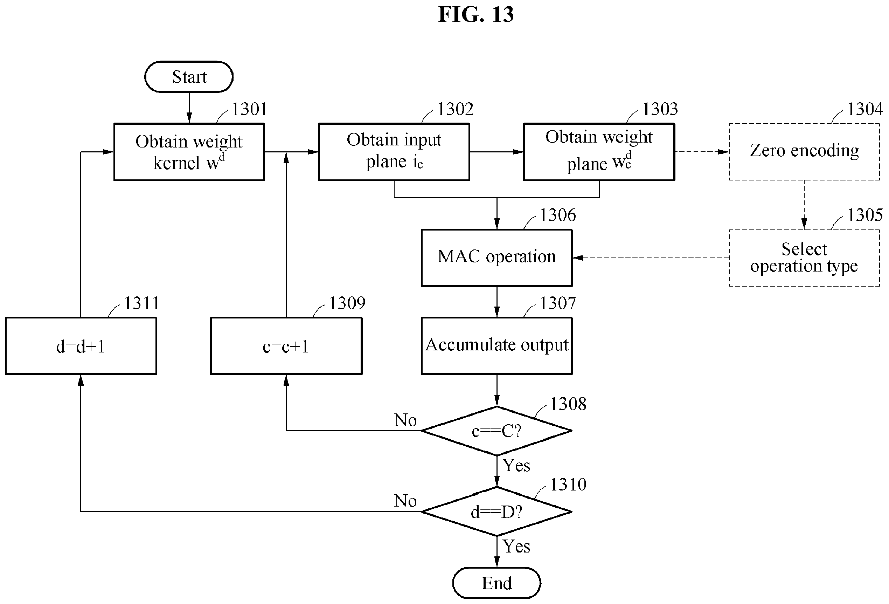

FIG. 13 is a flowchart illustrating an example of a cumulative convolution operation, in accordance with one or more embodiments. The operations in FIG. 13 may be performed in the sequence and manner as shown, although the order of some operations may be changed or some of the operations omitted without departing from the scope of the illustrative examples described. Many of the operations shown in FIG. 13 may be performed in parallel or concurrently. One or more blocks of FIG. 13, and combinations of the blocks, can be implemented by special purpose hardware-based computer that perform the specified functions, or combinations of special purpose hardware and computer instructions. In addition to the description of FIG. 13 below, the descriptions of FIGS. 1-12 are also applicable to FIG. 13, and are incorporated herein by reference. Thus, the above description may not be repeated here.

Referring to FIG. 13, in operation 1301, a weight kernel $w^d$ is obtained. In an example, "d" may denote an index of an output channel, and may be a natural number, for example, 1 through D, with an initial value of 1. Respective weight kernels may correspond to respective output channels, respectively. For example, a weight kernel $w^1$ may correspond to a first output channel, and a weight kernel $w^2$ may correspond to a second output channel.

In operation 1302, an input plane $i_c$ is obtained. In operation 1303, a weight plane $W_c^d$ is obtained. In an example, "c" denotes an index of an input channel, and may be a natural number, for example, 1 through C, with an initial value of 1. Input planes and weight planes may respectively correspond to input channels. In an example, an input plane $i_1$ and a weight plane $W_1^d$ correspond to a first input channel, and an input plane $i_2$ and a weight plane $W_2^d$ correspond to a second input channel.

In operation 1306, a MAC operation is performed. In an example, cumulative data is generated by accumulating multiplication results from multiplications between at least a portion of input elements in the input plane $i_c$ and at least a portion of weight elements in the weight plane $W_c^d$. In this example, input element vectors corresponding to at least a portion of the weight elements are extracted from the input plane $i_c$, weighted input element vectors corresponding to multiplication results from multiplications between the extracted input element vectors and at least a portion of the weight elements are generated, and then the cumulative data is generated by accumulating the weighted input element vectors. In this example, offsets corresponding to the input element vectors may be determined based on indices of at least a portion of the weight elements, and the input element vectors are extracted from the input plane $i_c$ based on the determined offsets.

In operations 1304 and 1305, zero-skipping is performed. Specifically, in operation 1304, zero encoding is performed. In operation 1305, an operation type is selected. When the number of non-zero weight elements is determined through the zero encoding, an operation type corresponding to the determined number of non-zero weight elements is selected, and input elements corresponding to the non-zero weight elements are loaded to a register. For example, input element vectors corresponding to the non-zero weight elements are loaded to the register.

When the operation type is selected, operations based on a preset operation type may be performed. For example, the operations may include multiplying non-zero weight elements and the input elements, or the input element vectors, in the register, and generating the cumulative data, for example, a cumulative vector, by accumulating results of the multiplying. Thus, when the cumulative data is generated, an operation of multiplying zero weight elements and the input elements may be skipped.

In operation 1307, an output is accumulated. For example, cumulative data corresponding to an output of a MAC operation may be accumulated. For example, when a first repetition for c which is 1 (c = 1) is performed, an input plane $i_1$ is obtained and a weight plane $W_1^d$ is obtained, and first cumulative data is generated by accumulating multiplication results from multiplications between at least a portion of first input elements in the obtained input plane $i_1$ and at least a portion of first weight elements in the obtained weight plane $W_1^d$. When a second repetition for c which is 2 (c = 2) is performed, an input plane $i_2$ is obtained and a weight plane $W_2^d$ is obtained, and second cumulative data is generated by accumulating multiplication results from multiplications between at least a portion of second input elements in the obtained input plane $i_2$ and at least a portion of second weight elements in the obtained weight plane $W_2^d$. In this example, the generated first cumulative data and second cumulative data are accumulated. When a Cth repetition for c which is C (c = C) is performed, an output plane is generated based on a sum of cumulative data for each input channel.

In operation 1308, c and C are compared. When c and C are different, for example, when c is less than C, c is increased by 1 in operation 1309, and operation 1302 is performed. When c is equal to C, d and D are compared in operation 1309. When d and D are different, for example, when d is less than D, d is increased by 1 in operation 1311 and operation 1301 is performed. A convolution may be performed on all input channels while an output channel is set or fixed through operations 1308 and 1309, and a convolution operation may be performed on all output channels by changing an output channel through operations 1310 and 1311.

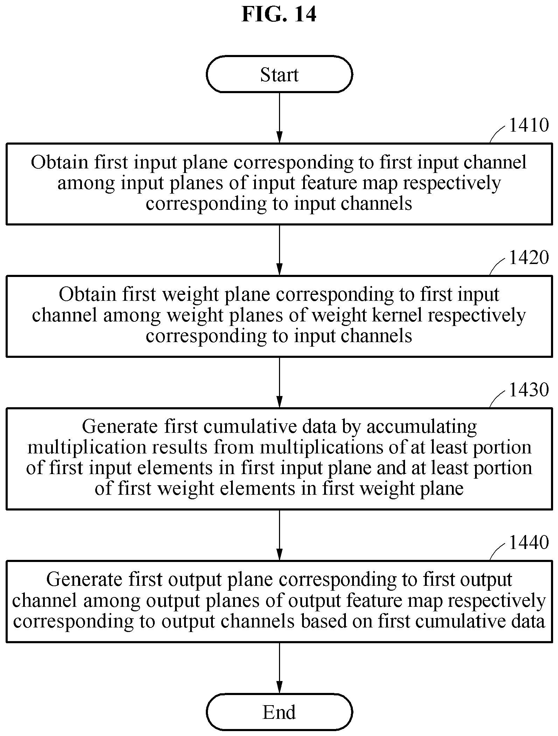

FIG. 14 is a flowchart illustrating an example of a data processing method for a neural network, in accordance with one or more embodiments. The operations in FIG. 14 may be performed in the sequence and manner as shown, although the order of some operations may be changed or some of the operations omitted without departing from the scope of the illustrative examples described. Many of the operations shown in FIG. 14 may be performed in parallel or concurrently. One or more blocks of FIG. 14, and combinations of the blocks, can be implemented by special purpose hardware-based computer that perform the specified functions, or combinations of special purpose hardware and computer instructions. In addition to the description of FIG. 14 below, the descriptions of FIGS. 1-13 are also applicable to FIG. 14, and are incorporated herein by reference. Thus, the above description may not be repeated here.

Referring to FIG. 14, in operation 1410, a processing apparatus obtains a first input plane corresponding to a first input channel among input planes of an input feature map respectively corresponding to input channels. In operation 1420, the processing apparatus obtains a first weight plane corresponding to the first input channel among weight planes of a weight kernel respectively corresponding to the input channels. In operation 1430, the processing apparatus generates first cumulative data by accumulating multiplication results from multiplications between at least a portion of first input elements in the obtained first input plane and at least a portion of first weight elements in the obtained first weight plane. In operation 1440, the processing apparatus generates a first output plane corresponding to a first output channel among output planes of an output feature map respectively corresponding to output channels based on the generated first cumulative data. For a more detailed description of a data processing method with a neural network implementation, reference may be made to what has been described above with reference to FIGS. 1 through 13.

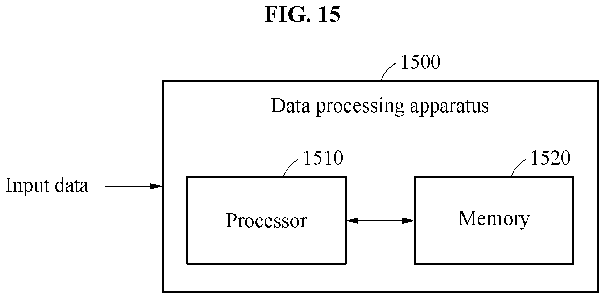

FIG. 15 is a diagram illustrating an example of a data processing apparatus for a neural network, in accordance with one or more embodiments.

The data processing apparatus 1500 may receive input data, and process an operation of a neural network associated with the received input data. The operation of the neural network may include, as non-limiting examples, an object recognition operation and a user verification operation, as examples. The processing apparatus 1500 may perform one or more of the operations or methods described herein in relation to processing by the neural network, and provide a user with a result of processing by the neural network. The processing apparatus 1500 may perform a cumulative convolution operation as described above while processing the operation of the neural network.

Referring to FIG. 15, the processing apparatus 1500 may include one or more processors 1510 and one or more memories 1520. In the examples, a "processor" may mean one or more processors, and a "memory" may mean one or more memories. The memory 1520 may be connected to the processor 1510, and store instructions executable by the processor 1510, and data to be processed by the processor 1510 or data processed by the processor 1510. The memory 1520 may include a non-transitory computer-readable medium, for example, a high-speed random-access memory (RAM), and/or a nonvolatile computer-readable storage medium, for example, at least one disk storage device, a flash memory device, and other nonvolatile solid-state memory devices.

The processor 1510 may execute instructions to perform one or more of the operations or methods described above with reference to FIGS. 1 through 14. For example, when an instruction stored in the memory 1520 is executed by the processor 1510, the processor 1510 may obtain a first input plane corresponding to a first input channel among input planes of an input feature map respectively corresponding to input channels, obtain a first weight plane corresponding to the first input channel among weight planes of a weight kernel respectively corresponding to the input channels, generate first cumulative data by accumulating multiplication results from multiplications of at least a portion of first input elements in the obtained first input plane and at least a portion of first weight elements in the obtained first weight plane, and generate a first output plane corresponding to a first output channel among output planes of an output feature map respectively corresponding to output channels based on the generated cumulative data. In an example, the data processing apparatus 1500 may further store instructions, for example, in memory 1520, which when executed by the processor 1510 configure the processor 1510 to implement such one or more or any combination of operations described herein.

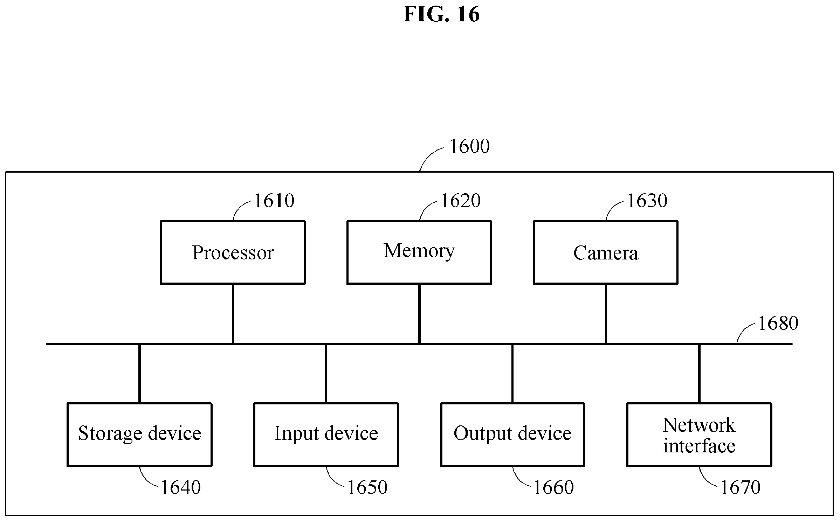

FIG. 16 is a diagram illustrating an example of an electronic apparatus, in accordance with one or more embodiments.

The electronic apparatus 1600 may receive input data, and process an operation of a neural network associated with the received input data. The operation of the neural network may include, as non-limiting examples, an object recognition operation and a user verification operation, as examples. The electronic apparatus 1600 may perform a cumulative convolution operation as described above while processing the operation of the neural network. The electronic apparatus 1600 may include the processing apparatus described above with reference to FIGS. 1 through 15, and perform an operation of the processing apparatus as described above with reference to FIGS. 1 through 15.

Referring to FIG. 16, the electronic apparatus 1600 may include one or more processors 1610, one or more memories 1620, a camera 1630, a storage device 1640, an input device 1650, an output device 1660, and a network interface 1670. The processor 1610, the memory 1620, the camera 1630, the storage device 1640, the input device 1650, the output device 1660, and the network interface 1670 may communicate with one another through a communication bus 1680.

The one or more processors 1610 may execute a function and an instruction in the electronic apparatus 1600. For example, the processor 1610 may process instructions stored in the memory 1620 or the storage device 1640. The processor 1610 may perform one or more of the operations or methods described above with reference to FIGS. 1 through 15.

The memory 1620 may store information to be used to process the operation of the neural network. The memory 1620 may include a computer-readable storage medium or a computer-readable storage device. The memory 1620 may store instructions to be executed by the processor 1610, and store related information while software or an application is being executed by the electronic apparatus 1600.

The camera 1630 may capture a still image, a moving or video image, or both images. The camera 1630 may capture an image of a facial region to be input by a user for facial verification or recognition. The camera 1630 may also provide a three-dimensional (3D) image including depth information of objects.

The storage device 1640 may include a computer-readable storage medium or a computer-readable storage device. The storage device 1640 may store a greater amount of information for a longer period of time, compared to the memory 1620. The storage device 1640 may include, for example, a magnetic hard disk, an optical disc, a flash memory, a floppy disk, and other types of nonvolatile memory that are well-known in the related technical field.

The input device 1650 may receive an input from a user through a traditional input method, including, as non-limiting examples, a keyboard and a mouse, and a new input method, for example, a touch input, a voice input, and an image input. The input device 1650 may include, for example, a keyboard, a mouse, a touchscreen, a microphone, and other devices that may detect the input from the user and transmit the detected input to the electronic apparatus 1600.

The output device 1660 may provide an output of the electronic apparatus 1600 to a user through a visual, auditory, or tactile channel. The output device 1660 may include, for example, a display, a touchscreen, a speaker, a vibration generator, and other devices that may provide the output to the user. The network interface 1670 may communicate with an external device through a wired or wireless network.

The neural network apparatuses, data processing apparatuses, the electronic apparatus, data processing apparatus 100, processor 1510, memory 1520, processor 1610, memory 1620, camera 1630, storage device 1640, input device 1650, output device 1660, network interface 1670, and other devices, and other components described herein with respect to FIGS. 1-16 are implemented as, and by, hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-16 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller, e.g., as respective operations of processor implemented methods. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software include higher-level code that is executed by the one or more processors or computers using an interpreter. The instructions or software may be written using any programming language based on the block diagrams and the flow charts illustrated in the drawings and the corresponding descriptions in the specification, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent, after an understanding of the disclosed application, that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

Furthermore the following clauses describe data processing methods according to one or more embodiments.

Clause 1. A processor-implemented method performed by a processor of an electronic apparatus, the method comprising: receiving an input plane of a layer of a neural network including a plurality of input elements; receiving a weight plane corresponding to the input plane of the layer, the weight plane including a plurality of weight elements; and generating an output plane by accumulating multiplication results obtained by performing a multiplication operation between each of the weight elements in the weight plane and a corresponding input element of the input elements in the input plane.

Clause 2. The method of clause 1, wherein, when a zero weight element corresponding to a value of zero is present among the weight elements, a multiplication between the zero weight element and an input element corresponding to the zero weight element is skipped.

Clause 3. The method of any of clauses 1-2, wherein a convolution operation associated with the layer of the neural network is performed based on single instruction multiple data (SIMD).

Clause 4. The method of any of clauses 1-3, wherein the input plane and the weight plane correspond to a single input channel, and the output plane corresponds to a single output channel.

Clause 5. The method of any of the clauses 1-4, wherein the input plane is one of a plurality of input planes corresponding to an input feature map of the layer, and the weight plane is one of a plurality of weight planes corresponding to a weight kernel of the layer, and wherein an output feature map of the layer is determined based on the output plane, and one or more output planes generated based on one or more other input planes excluding the input plane among the plurality of input planes, and one or more other weight planes excluding the weight plane among the plurality of weight planes.

Clause 6. A processor-implemented method comprising: receiving an input feature map including a plurality of input planes; receiving a weight kernel including a plurality of weight planes; performing a cumulative convolution operation between the input feature map and the weight kernel; and generating an output plane based on the cumulative convolution operation.

Clause 7. The method of clause 6, further comprising generating cumulative planes by performing multiply and accumulate (MAC) operations between the plurality of input planes and the plurality of weight planes.

Clause 8. The method of clauses 6 or 7, wherein the output plane is generated by accumulating outputs of the cumulative planes.

**Claims**

1. A processor implemented data processing method, comprising:

   receiving a first input plane corresponding to a first input channel from among a plurality of input planes of an input feature map;
   receiving a first weight plane corresponding to the first input channel among a plurality weight planes of a weight kernel;
   generating first cumulative data by accumulating multiplication results from multiplication operations between at least a portion of first input elements in the first input plane, and at least a portion of first weight elements in the first weight plane; and
   generating a first output plane corresponding to a first output channel among a plurality of output planes of an output feature map based on the first cumulative data,
   wherein each of the plurality of input planes, and each of the plurality of weight planes respectively correspond to an input channel, and
   wherein each of the plurality of output planes corresponds to an output channel.

2. The method of claim 1, wherein the generating of the first output plane comprises:

   generating the first output plane based on a sum of cumulative data for each input channel including the first cumulative data.

3. The method of claim 1 or 2, further comprising:

receiving a second input plane corresponding to a second input channel among the input planes;
receiving a second weight plane corresponding to the second input channel among the plurality of weight planes; and
generating second cumulative data by accumulating multiplication results from multiplications between at least a portion of second input elements in the second input plane, and at least a portion of second weight elements in the second weight plane, wherein the generating of the first output plane preferably comprises:
generating the first output plane based on a sum of the first cumulative data and the second cumulative data.

4. The method of any of the previous claims, wherein the generating of the first cumulative data comprises:

extracting, from the first input plane, first input element vectors corresponding to the portion of the first weight elements;
generating first weighted input element vectors corresponding to multiplication results from multiplication operations between the first input element vectors and the portion of the first weight elements; and
generating the first cumulative data by accumulating the first weighted input element vectors, wherein the extracting of the first input element vectors preferably comprises:

determining offsets corresponding to the first input element vectors based on indices of the portion of the first weight elements; and
extracting the first input element vectors from the first input plane based on the determined offsets, and/or wherein a size of the first input element vectors and a size of the first weighted input element vectors preferably correspond to a single instruction multiple data (SIMD) operation unit.

5. The method of any of the previous claims, wherein, when the first cumulative data is generated, an operation of multiplying zero weight elements corresponding to a value of zero among the portion of the first weight elements and the portion of the first input elements is skipped.

6. The method of any of the previous claims, further comprising:

determining a number of non-zero weight elements not corresponding to zero among the first weight elements; and
selecting an operation type corresponding to the determined number of non-zero weight elements from among a plurality of operation types to perform a preset type of operation, wherein the generating of the first cumulative data preferably comprises:
generating the first cumulative data by accumulating the multiplication results from the multiplication operations between the portion of the first input elements and the non-zero weight elements corresponding to the portion of the first weight elements based on the selected operation type, or:

extracting, from the first input plane, first input element vectors corresponding to the non-zero weight elements based on indices of the non-zero weight elements;
generating first weighted input element vectors corresponding to multiplication results from multiplication operations between the first input element vectors and the non-zero weight elements corresponding to the portion of the first weight elements; and
generating the first cumulative data by accumulating the first weighted input element vectors.

7. The method of any of claims 1-6, further comprising separately multiplying respective weight elements of each of the weight planes by plural elements of the first input plane.

8. The method of any of the previous claims, wherein:

receiving the first input plane comprises receiving an input plane of a layer of a neural network including a plurality of input elements; and
receiving the weight plane comprises receiving a weight plane corresponding to the input plane of the layer, the weight plane including a plurality of weight elements;
the method further comprising:
generating an output plane by accumulating multiplication results obtained by performing a multiplication operation between each of the weight elements in the weight plane and a corresponding input element of the input elements in the input plane.

9. The method of claim 8, wherein at least one of the following applies:

when a zero weight element corresponding to a value of zero is present among the weight elements, a multiplication between the zero weight element and an input element corresponding to the zero weight element is skipped; a convolution operation associated with the layer of the neural network is performed based on single instruction multiple data (SIMD); the input plane and the weight plane correspond to a single input channel, and the output plane corresponds to a single output channel; the input plane is one of a plurality of input planes corresponding to an input feature map of the layer, and the weight plane is one of a plurality of weight planes corresponding to a weight kernel of the layer, wherein an output feature map of the layer is determined based on the output plane, and one or more output planes generated based on one or more other input planes excluding the input plane among the plurality of input planes, and one or more other weight planes excluding the weight plane among the plurality of weight planes.

10. A processor-implemented method, preferably the method according to any of the previous claims, comprising:

   receiving an input feature map including a plurality of input planes;
   receiving a weight kernel including a plurality of weight planes;
   performing a cumulative convolution operation between the input feature map and the weight kernel; and
   generating an output plane based on the cumulative convolution operation.

11. The method of claim 10, further comprising generating cumulative planes by performing multiply and accumulate (MAC) operations between the plurality of input planes and the plurality of weight planes, and/or wherein the output plane is generated by accumulating outputs of the cumulative planes.

12. A non-transitory computer-readable storage medium storing instructions that, when executed by a processor, cause the processor to perform the data processing method of any of the previous claims.

13. A data processing apparatus, comprising:
one or more processors configured to:

   receive a first input plane corresponding to a first input channel from among a plurality of input planes of an input feature map;
   receive a first weight plane corresponding to the first input channel among a plurality of weight planes of a weight kernel;
   generate first cumulative data by accumulating multiplication results from multiplication operations between at least a portion of first input elements in the first input plane and at least a portion of first weight elements in the first weight plane; and
generate a first output plane corresponding to a first output channel among a plurality of output planes of an output feature map respectively corresponding to output channels based on the first cumulative data,
wherein each of the plurality of input planes, and each of the plurality of weight planes respectively correspond to an input channel, and
wherein each of the plurality of output planes corresponds to an output channel.

14. The apparatus of claim 13, wherein the processor is further configured to:
perform the method of any of the claims 1-11.

15. The apparatus of claim 13 or 14, further comprising a memory storing instructions that, when executed by the one or more processors, configure the one or more processors to perform the receiving of the first input plane, the receiving of the first weight plane, the generating of the first cumulative data, and the generating of the first output plane.

## FIG. 1

**FIG. 2**

Weight kernel 210

Input feature map 220

Output feature map 230

**FIG. 3**

Weight kernel
310

Input feature map
320

Output feature map
330

$K^2 \times C$

$\times K^2$

$W \times H$

$K^2 \times C$

**FIG. 4**

Input feature map
410

Weight kernel
420

Output plane
430

C

H

W

*

C

K

W

=

H

W

**FIG. 5**

Input planes 510 · Weight planes 520 · Cumulative planes 530 · Output plane 540

MAC operation: 511 ↔ 521 = 531
MAC operation: 512 ↔ 522 = 532
MAC operation: 513 ↔ 523 = 533

531 + 532 + 533 → Output plane 540

EP 3 789 928 A2

# FIG. 6

| Input plane<br>610 | MAC operation | Weight plane<br>620 | | Cumulative plane<br>630 |

| | | |
|---|---|---|
| $w_1$ | $w_2$ | $w_3$ |
| $w_4$ | $w_5$ | $w_6$ |
| $w_7$ | $w_8$ | $w_9$ |

$$=$$

# FIG. 7

FIG. 8

# FIG. 9

**FIG. 10**

**FIG. 11**

**FIG. 12**

_1210_

| $w_1$ | $w_2$ | $w_3$ | $w_4$ | $w_5$ | $w_6$ | $w_7$ | $w_8$ | $w_9$ |
|---|---|---|---|---|---|---|---|---|

Zero encoding

| 1 | 1 | 0 | 0 | 0 | 1 | 1 | 0 | 0 |
|---|---|---|---|---|---|---|---|---|

_1220_

Operation type selection

# of non-zero : 4 → Operation type 4

Data loading

(reg1) : w1 ~ #offset : 0
(reg2) : w2 ~ #offset : 1
(reg3) : w6 ~ #offset : (W+2) + 2
(reg4) : w7 ~ #offset : (W+2) * 2

_1230_

Operation type 0
Operation type 1
Operation type 2
⋮
Operation type 4
⋮
Operation type 9

EP 3 789 928 A2

# FIG. 13

Start

Obtain weight kernel $w^d$ — 1301

Obtain input plane $i_c$ — 1302

Obtain weight plane $w_c^d$ — 1303

Zero encoding — 1304

Select operation type — 1305

MAC operation — 1306

Accumulate output — 1307

$c == C?$ — 1308
No → $c = c+1$ — 1309

$d == D?$ — 1310
No → $d = d+1$ — 1311

Yes

End

EP 3 789 928 A2

# FIG. 14

Start

1410

Obtain first input plane corresponding to first input channel among input planes of input feature map respectively corresponding to input channels

1420

Obtain first weight plane corresponding to first input channel among weight planes of weight kernel respectively corresponding to input channels

1430

Generate first cumulative data by accumulating multiplication results from multiplications of at least portion of first input elements in first input plane and at least portion of first weight elements in first weight plane

1440

Generate first output plane corresponding to first output channel among output planes of output feature map respectively corresponding to output channels based on first cumulative data

End

**FIG. 15**

**FIG. 16**